# EUROPÄISCHE PATENTSCHRIFT

(11) **EP 4 113 108 B1**
(45) Veröffentlichungstag und Bekanntmachung des Hinweises auf die Patenterteilung: **13.08.2025**
(21) Anmeldenummer: 22190241.4
(22) Anmeldetag: 19.03.2018
(51) Int. Cl.: G01N 23/18, G01N 23/044, G06T 11/00

(54) **VERFAHREN UND VORRICHTUNG ZUR BESTIMMUNG VON MINDESTENS ZWEI DURCHSTRAHLUNGSPOSITIONEN**
METHOD AND DEVICE FOR DETERMINING AT LEAST TWO IRRADIATION POSITIONS
PROCÉDÉ ET DISPOSITIF DE DÉTERMINATION DES AU MOINS DEUX POSITIONS D'IRRADIATION

(30) Priorität: 20.03.2017 EP 17161932
(43) Veröffentlichungstag der Anmeldung: 04.01.2023
(62) Teilanmeldung aus: 18711119.0
(73) Patentinhaber: Fraunhofer-Gesellschaft zur Förderung der angewandten Forschung e.V., 80686 München (DE)
(72) Erfinder: STOCKER, Thomas, 90766 Fürth (DE)
(74) Vertreter: Pfitzner, Hannes

(56) Entgegenhaltungen:
- WO-A2-02/31767
- DE-A1- 10 142 159
- DE-A1- 102007 056 276
- DE-A1- 102010 022 285
- DE-A1- 102014 008 671
- KONSTANTINOS TIGKOS ET AL: "Simulation study for optimization of X-ray inspection setup applied to CFRP aerostructures", ICT CONFERENCE 2014, 28 February 2014 (2014-02-28), pages 75 - 85, XP055363187

## Beschreibung

Ausführungsbeispiele der vorliegenden Erfindung beziehen sich auf ein Verfahren zur Bestimmung von mindestens zwei Durchstrahlungspositionen für die zerstörungsfreie Werkstoffprüfung, und eine entsprechende Vorrichtung sowie ein entsprechendes Computerprogramm.

Oftmals erfolgt die zerstörungsfreie Werkstoffprüfung eines zu prüfenden Objekts, wie z. B. eines Leichtmetallrades, unter Zuhilfenahme eines Röntgensystems. Zur Qualitätssicherung werden produzierte Bauteile mit Röntgentechnik auf Fehlstellen geprüft. Die Prüfung einer größeren Menge von Bauteilen gleichen Typs (Serienprüfung) erfolgt typischerweise automatisch, zum einen hinsichtlich der Positionierung von Bauteilen und der Bildaufnahme, zum anderen bezogen auf die Bewertung. Konkret werden die Bauteile von einem Manipulator im Strahlengang positioniert, um aus verschiedenen Perspektiven Röntgenprojektionen aufzunehmen. Die Positionierung und die Bildaufnahme erfolgen dabei normalerweise für eine Serie von Bauteilen gleichartig. Die Bewertung der Projektionen wird im Anschluss durch geschultes Prüfpersonal oder automatisch durch ein Bildverarbeitungssystem durchgeführt.

Aktuell ist der Aufwand, neue Prüfobjekte an einer Anlage einzurichten verhältnismäßig hoch. Die Prüfung selbst erfolgt weitestgehend ohne Personalaufwand, für die Einrichtung jedoch muss geschultes Personal zur Verfügung stehen.

Die WO 02/31767 A2 offenbart ein Verfahren und eine Vorrichtung zur Darstellung eines Objekts mittels einer Durchstrahlung sowie Rekonstruktion. Hier werden unter anderem ein CAD-Modell des Objekts mitberücksichtigt. Die DE 102010022285 A1 beschreibt ein Verfahren zur Bestimmung der optimalen Lage eines Messobjekts bei der 3D-Computertomographie. Darüber hinaus ist auch noch die DE 10 2014008671 A1, die DE 10142159 A1 sowie die DE 102007056276 A1 zu nennen. Ferner formt die Veröffentlichung mit dem Titel "Simulation Study for Optimization of X-Ray Inspection Setup Applied to CFRP aerostructures", XP055363187, weiteren Stand der Technik.

Zur Einrichtung und Parametrierung der automatischen Röntgenprüfung von Bauteilen benötigen Anwender bisher mindestens ein Musterbauteil, für das in der Röntgenprüfanlage die Prüfpositionen festgelegt werden. Ein Bediener führt hierzu in einem speziellen Einrichtmodus der Anlage das Bauteil dem Manipulationssystem zu und positioniert das Bauteil manuell zu den gewünschten Prüfpositionen. Die Einrichtung der Positionen wird unterstützt durch die Visualisierung von "Live-Röntgenbildern" an einem Monitor. Soll zudem eine automatische Bildauswertung erfolgen, wird von jeder Prüfposition mindestens ein Bild aufgenommen. Die Bilder werden im Anschluss zur Parametrierung der Bildverarbeitung benutzt. Während dieses Prozesses steht die Röntgenprüfanlage nicht zur Prü fung von Bauteilen aus der Serie zur Verfügung und es kann u.U. zu Kapazitätsengpässen kommen. Deshalb besteht der Bedarf nach einem verbesserten Ansatz.

Aufgabe der vorliegenden Erfindung ist es den Vorgang zur Einrichtung und Parametrierung der automatischen Röntgenprüfung von Bauteilen derart zu optimieren, dass die Stillstandszeiten bei Röntgenprüfanlagen minimiert werden.

Die Aufgabe wird durch die unabhängigen Patentansprüche gelöst.

Ausführungsbeispiele der vorliegenden Erfindung schaffen ein Verfahren zur Bestimmung von mindestens zwei Durchstrahlungspositionen für die zerstörungsfreie Werkstoffprüfung eines zu prüfenden Objekts mittels eines Röntgensystems. Das Verfahren umfasst folgende fünf Basisschritte: "Einlesen von Geometrieparametern des Röntgensystems", wie z. B. möglicher Bewegungsbahnen von Röntgenröhre und Röntgendetektor, "Einlesen von Geometrieparametern des zu prüfenden Werkstücks", wie z. B. mittels eines CAD-Modells des Objekts, "Ermitteln einer ersten Relativposition des Röntgensystems zur Untersuchung des zu prüfenden Objekts gegenüber dem zu prüfenden Objekt, um eine ersten Durchstrahlungsposition zu erhalten" und "Ermitteln einer zweiten Relativposition, um eine zweiten Durchstrahlungsposition zu erhalten". Der fünfte und relevante Schritt bezieht sich auf das Analysieren der ersten und des zweiten Durchstrahlungspositionen auf Basis der Geometrieparameter von Röntgensystemen und des zu prüfenden Objekts hinsichtlich Eignung zur Werkstoffprüfung, d. h. also, ob mittels der zwei ermittelten Durchstrahlungspositionen die gewünschten Parameter (Eigenschaften) des zu prüfenden Objekts überprüfbar sind. Alternativ oder additiv kann die Analyse mit der Zielsetzung, zusätzliche Auswerteinformationen für die spätere reale zerstörungsfreie Werkstoffprüfung zu erhalten, erfolgen. Der Schritt des "Analysierens" erfolgt automatisiert.

Ausführungsbeispielen der vorliegenden Erfindung liegt die Erkenntnis zugrunde, dass ausgehend von CAD-Daten des Prüfobjekts und einem bekannten Koordinatensystem zur Abbildung der Bewegungsbahnen und Abbildungseigenschaften der Röntgenprüfanlage (mit allen Komponenten) bzw. allgemein ausgehend von der Kenntnis des Prüfobjekts und des Röntgensystems der Prüfprozess so simulierbar ist, dass eine Aussage darüber getroffen werden kann, ob die beispielsweise durch den Bediener gewählten oder automatisch bestimmten Durchstrahlungspositionen eine Untersuchung des Prüfobjekts zulassen oder nicht. Folglich ermöglicht dieses Verfahren die Einrichtung der Prüfpositionen und die Parametrierung der Bildverarbeitung an einem normalen PC, ohne einen direkten Zugriff auf die Röntgenprüfanlage zu erfordern. Im Ergebnis wird dann entsprechend Ausführungsbeispielen das fertige Prüfprogramm erstellt und beispielsweise per Netzwerkverbindung auf die Anlage aufgespielt. Die Anlage steht während der gesamten Zeit zur Prüfung von Bauteilen zur Verfügung. Damit werden die Einrichtungen und Parametrierungen von neuen Bauteilen deutlich vereinfacht. Zudem wird die Genauigkeit sowie Zuverlässigkeit der Prüfung verbessert. Im Anschluss an die Prüfung stehen detaillierte Daten über die Prüfung zur Nachverarbeitung zur Verfügung.

Unter dem Begriff "Analysieren" sind insgesamt vier alte Aspekte zusammengefasst.

Entsprechend einem ersten Aspekt umfasst der Schritt "Analysieren" das Bestimmen eines Vergrößerungsfaktors je Durchstrahlungsposition. Diese Bestimmung wird ausgehend von den ersten und zweiten Relativpositionen von Röntgensystemen gegenüber dem zu prüfenden Objekt bestimmt. Beispielsweise ist der Vergrößerungsfaktor umso größer, je näher das Objekt an der Strahlenquelle angeordnet ist und umso kleiner, je näher das Objekt an dem Röntgendetektor angeordnet ist. An dieser Stelle sei angemerkt, dass es auch noch weitere Einflussfaktoren, wie z. B. die Geometrie des Strahlendetektors, die Geometrie des Strahlenkegels und das Zusammenspiel von beiden gibt, so dass eine Variation des Vergrößerungsfaktors entlang der Detektionsfläche des Strahlendetektors resultieren kann. Ausgehend von dem bestimmten Vergrößerungsfaktor kann dann ein Vergrößerungsmaßstab (z.B. in quantifizierter Form) als Auswerteinformation für die reale Werkstoffprüfung ausgegeben werden.

Entsprechend einem zweiten Aspekt kann das Analysieren das Überprüfen dahin gehend aufweisen, ob alle zu prüfenden Elemente des zu prüfenden Objekts in virtuell simulierten Aufnahmen aus den zumindest ersten und zweiten Durchstrahlungspositionen abgebildet sind. Hierbei werden entsprechend Ausführungsbeispielen beispielsweise die realen Aufnahmen aus den zumindest zwei Durchstrahlungspositionen simuliert, um die virtuell simulierten Aufnahmen aus den zwei Durchstrahlungspositionen zu erhalten. Hierbei können entsprechend zusätzlichen Ausführungsbeispielen alle im CAD-Modell enthaltenen kritischen Bereiche (z. B. Bereich mit wechselndem Querschnitt oder Übergangsstellen) in den erhaltenen virtuellen bzw. simulierten Aufnahmen identifiziert werden, um (automatisch) zu überprüfen, ob alle zu prüfenden Elemente (kritischen Bereiche des zu prüfenden Objekts) durch die geplanten Aufnahmen abgedeckt sind. Es kann auch berücksichtigt werden, dass unterschiedliche Bereiche mit unterschiedlicher Detaillierung / Vergrößerung (allg.: unterschiedlichen Anforderungen) untersucht werden sollen (um beim Beispiel des Leichtmetallrades zu bleiben, höherer Detaillierungsgrad am Felgenhorn im Vergleich zum Felgenbett).

Entsprechend einem weiteren Ausführungsbeispiel/dritten Aspekt kann das Analysieren auch das Simulieren der zerstörungsfreien Werkstoffprüfung umfassen. Hierbei werden beispielsweise zuerst die realen Aufnahmen aus den zumindest zwei Durchstrahlungspositionen simuliert, um virtuell simulierte Aufnahmen zugehörig zu den zwei Durchstrahlungspositionen zu erhalten, wobei dann beispielsweise in einem nächsten Schritt das Objekt simulativ in den zwei erhaltenen Aufnahmen untersucht wird. Hierbei kann beispielsweise vorher das virtuell zu prüfende Objekt mittels virtueller Fehler - welche beispielsweise stochastisch über das Objekt verteilt sind oder dort wo in der Praxis die Fehler häufig vorkommen, angeordnet sind - versehen sein. Bei dem Simulieren wird dann überprüft, ob alle virtuellen Fehler detektierbar wären. Insofern wird entsprechend einem Ausführungsbeispiel untersucht, ob einzelne Fehler verdeckt sind, z. B. durch andere Fehler oder weitere Inhomogenitäten einer Durchstrahlung oder ob vielleicht der Fehler an einer Position in dem Objekt angeordnet ist, so dass diese mit dem gewählten Vergrößerungsfaktor nicht mehr detektiert werden kann. Des Weiteren wird auch untersucht, ob der Fehler beispielsweise durch Streustrahlung derart überlagert ist, dass er nicht mehr detektierbar ist. Ein Vorteil bei diesem Aspekt bzw. eigentlich für alle Aspekte ist, dass die geometrischen Ausdehnungen des zu prüfenden Objekts bekannt sind, so dass, wenn ein Fehler ermittelt wird, auch eine Ausdehnung desselben bzw. eine maximale Ausdehnung desselben direkt erkennbar ist. Deshalb kann entsprechend weiteren Ausführungsbeispielen als Auswerteinformation das Prüfprogramm eine Information über die Geometrieparameter des zu prüfenden Objekts umfassen, so dass die Ausdehnung oder allgemein die Lage des bei der realen Werkstoffprüfung real detektierten Fehlers unter Zuhilfenahme der Zusatzinformation zugeordnet werden kann.

Entsprechend einem weiteren Ausführungsbeispiel bzw. einem vierten Aspekt kann das Analysieren das Bestimmen einer Streustrahlung, welche im Regelfall abhängig von den einzelnen Relativpositionen sowie von der Geometrie des zu prüfenden Objekts und dem Material des zu prüfenden Objekts ist, umfassen. Diese Streustrahlung hat, wie bereits oben im Rahmen des Aspekts 3 erläutert, Einfluss auf die Möglichkeit, die Fehler entsprechend zu erkennen. Entsprechend einem Ausführungsbeispiel umfasst der Schritt des Bestimmens der Streustrahlung einen Schritt des Simulierens der realen Aufnahmen aus den zumindest zwei Durchstrahlungspositionen, um die virtuell simulierten Aufnahmen aus den zumindest zwei Durchstrahlungspositionen zu erhalten und anhand derer zu erkennen, ob hier Streustrahlungen bestehen würden.

Ein zusätzlicher Aspekt ist, dass neben der Prüfprogrammplanung mittels der simulativen Untersuchung auch Referenzbilder erzeugt werden können und als Auswerteinformation ausgegeben werden, um bei der realen Werkstoffprüfung Abweichungen im Sinne von Inhomogenitäten oder Fehlern einfacher zu erkennen. Deshalb umfasst das Verfahren entsprechend einem weiteren Ausführungsbeispiel auch den Schritt des Ausgebens eines Prüfprogramms mit entweder den Referenzbildern als zusätzliche Auswerteinformationen oder Informationen über die Streustrahlung als zusätzliche Auswerteinformationen oder Informationen über die geometrischen Ausdehnungen des zu untersuchenden Objekts.

Wie bereits an einigen Stellen erläutert, bauen einzelne Aspekte aufeinander auf bzw. unterstützen sich gemeinsam. Beispielsweise ist das Ermitteln der Streustrahlung häufig ein Bestandteil des Verfahrens zur Überprüfung, ob alle Fehler gut aus den gewählten Durchstrahlungspositionen detektierbar sind. Des Weiteren baut dieser Schritt des Ermittelns, ob die Durchstrahlungsposition zur Fehlerdetektion genügen, auch auf dem Schritt des Ermittelns eines Vergrößerungsfaktors je Durchstrahlungsposition auf, da eben (wie bereits erläutert) für Fehler an bestimmten Positionen des zu prüfenden Objekts einer entsprechender Vergrößerungsfaktor gewählt werden muss. Auch ist Bestandteil des Überprüfens, ob eine gute Fehlerdetektion möglich ist, häufig das Überprüfen, ob alle relevanten Merkmale des zu prüfenden Objekts in den entsprechenden Aufnahmen aus den gewählten Durchstrahlungspositionen enthalten sind. Insofern können die Verfahren entsprechend der oben erläuterten Aspekte bevorzugt, aber nicht notwendigerweise auch in Kombination auftreten. Entsprechend einem weiteren Ausführungsbeispiel können die einzelnen Verfahren auch durch ein Computerprogramm implementiert sein.

Ein weiteres Ausführungsbeispiel schafft eine Vorrichtung zum Bestimmen von mindestens zwei Prüfpositionen zur zerstörungsfreien Werkstoffprüfung eines zu prüfenden Objekts mittels eines Röntgensystems. Hierbei erfolgt das Einlesen der Geometrieparameter über entsprechende Schnittstellen, wobei das Bestimmen der Durchstrahlungspositionen und die Überprüfung der Eignung der Durchstrahlungspositionen zur Werkstoffprüfung bzw. der Ermittlung von Auswerteinformationen unter Zuhilfenahme einer Berechnungseinheit bzw. durch die Berechnungseinheit erfolgen. An dieser Stelle sei angemerkt, dass insbesondere das Ermitteln der ersten und zweiten Relativpositionen auch in Interaktion mit einem Benutzer erfolgen kann.

Weiterbildung ist in den Unteransprüchen definiert. Ausführungsbeispiele der vorliegenden Erfindung werden anhand der beiliegenden Zeichnungen erläutert. Es zeigen:
- Fig. 1a: ein schematisches Flussdiagramm eines Verfahrens zur Bestimmung von mindestens zwei Prüfpositionen gemäß einem Ausführungsbeispiel;
- Fig. 1b: ein schematisches Blockdiagramm eines Röntgensystems zur Illustration des Verfahrens nach Fig. 1a;
- Fig. 2a-2e: schematische Illustrationen der unterschiedlichen Analyse-Ansätze gemäß Ausführungsbeispielen; und
- Fig. 3: eine schematische Darstellung einer Vorrichtung zur Bestimmung von mindestens zwei Prüfpositionen zur Feststellung einer Werkstoffprüfung.

Bevor nachfolgend Ausführungsbeispiele der vorliegenden Erfindung anhand der beiliegenden Zeichnungen erläutert werden, sei darauf hingewiesen, dass gleichwirkende Elemente und Strukturen mit gleichen Bezugszeichen versehen sind, so dass die Beschreibung derer aufeinander anwendbar bzw. austauschbar ist.

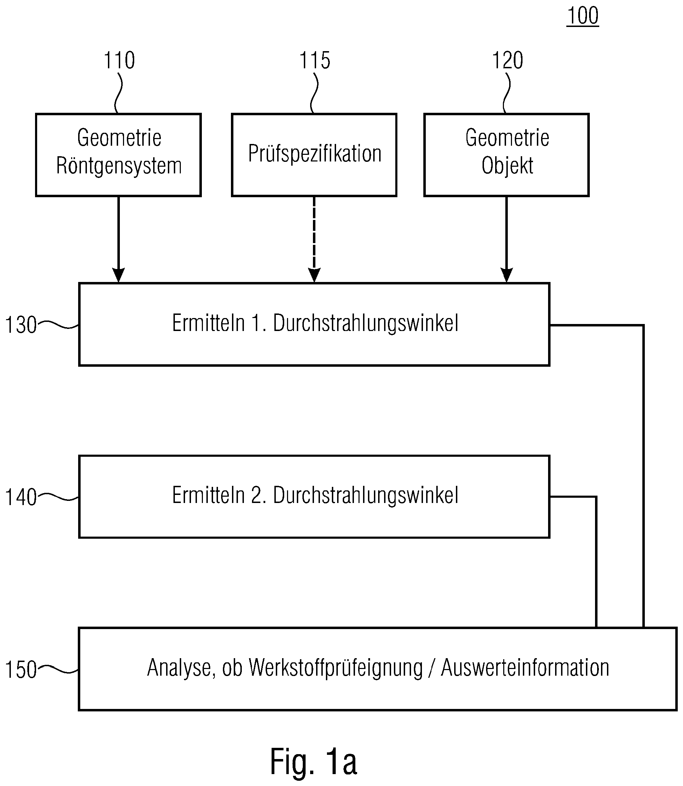

Fig. 1a zeigt ein Verfahren 100 mit insgesamt fünf Basisschritten 110 bis 150.

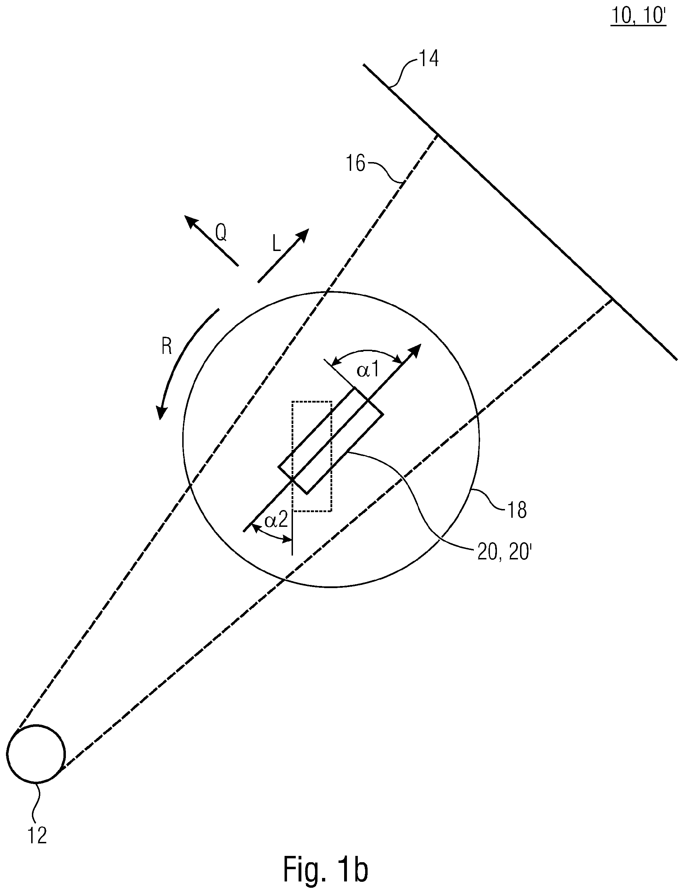

In Fig. 1b wird das Verfahren 100 anhand von Darstellungen eines Röntgensystems 10 näher illustriert. Das Röntgensystem 10 umfasst zumindest eine Strahlenquelle 12 sowie einen Röntgendetektor 14, wobei durch die Geometrie von Röntgenquelle 12 und Röntgendetektor 14 ein Strahlenkegel 16 definiert wird. Zusätzlich weist das hier vorgeschlagene Röntgensystem auch noch einen Manipulator 18, wie z. B. einen rotierbaren und/oder verschiebbaren Teller (vgl. Pfeile) auf, auf welchem das zu untersuchende Objekt 20 (hier ein Würfel) angeordnet ist.

Da es bei dem Verfahren 100 darum geht, die Prüfpositionen des Objekts 20 zu dem Röntgensystem 10 virtuell zu simulieren, wird für die virtuelle Geometrie des Röntgensystems das Bezugszeichen 10' sowie für die virtuelle Geometrie des zu prüfenden Objekts 20 das Bezugszeichen 20' eingeführt. Die virtuelle Geometrie des Röntgensystems 10' lässt sich anhand von Geometrieparametern 10' beschreiben, während die Geometrie des virtuellen zu prüfenden Objekts 20' ebenfalls anhand von Geometrieparametern 20', z.B. CAD-Modellen beschrieben werden kann.

Die realen und virtuellen Prüfpositionen sind durch Relativpositionen des Röntgensystems 10/10' zum Objekt 20/20' festgelegt. Im Wesentlichen werden die Prüf- bzw. Relativpositionen durch den Manipulator 18 und hier insbesondere die Parameter R für die Rotation, L für die Längsverschiebung (auf der Achse zwischen Röntgenquelle 12 und Detektor 14) und Q für die Querverschiebung (beispielsweise orthogonal zu L) beeinflusst/definiert. Im häufigsten Fall wird nur der Parameter R variiert, ausgehend von welchem sich unterschiedliche Durchstrahlungspositionen des Objekts 20' einstellen. Hier ist beispielsweise ein erste Durchstrahlungsposition aus dem Winkel α1 mit durchgezogenen Linien, beispielsweise eine senkrechte Durchstrahlungsposition, und eine zweiter Durchstrahlungsposition aus dem Winkel α2 mit der gepunkteten Linie illustriert. An dieser Stelle sei gleich angemerkt, dass je nach Positionierung des Objekts 20 auf dem Manipulator 18 (Drehteller) beim Verdrehen in Richtung R auch eine Verschiebung des Objekts 20 in Q- oder L-Richtung erfolgen kann.

Nachdem nun die Ausgangssituation erläutert wurde, wird nachfolgend das Verfahren 100 zur Bestimmung von mindestens zwei Prüfpositionen (Durchstrahlungsposition zu α1 und Durchstrahlungsposition zu α2) bzw. Relativposition zwischen dem Objekt 20' sowie dem Röntgensystem 10' eingegangen.

In dem ersten Schritt 110 werden die Geometrieparameter 10', d. h. also die Manipulationsparameter R, L, Q sowie die entsprechenden Abstände zwischen der Röntgenröhre 12 und dem Röntgendetektor 14 unter der daraus resultierende Strahlenkegel 16 eingelesen. Hierbei können auch Information bzgl. des Röntgensystems, z. B. Position oder Geometrie des Brennflecks, enthalten sein. Dieser Schritt ist mit dem Bezugszeichen 110 versehen, wobei das Ergebnis dieses Schrittes ist, dass beispielsweise alle relevanten Parameter für das Durchführen des Verfahrens 100 vorliegen. Hierzu zählen neben den Bewegungsparametern (Parameter zur Beschreibung des Manipulationssystems: Bezugszeichen R, L, Q) und Geometrieparametern (Anlagengeometrie, Typ und Lage der Röntgenquelle, Typ und Lage des Detektors, vgl. Bezugszeichen 16) auch weitere Parameter bezüglich der Auflösung des Detektors 14 oder allgemein des Auflösungsvermögens des Röntgensystems 10 oder andere Details, wie z. B. die eingesetzte Vorfilterung. Die Parameter können dann auch Bewegungsmodelle bezüglich des Manipulators vorliegen, wobei hier vorzugsweise das Koordinatensystem des Röntgensystems als Bezugskoordinatensystem genutzt wird.

Parallel bzw. danach erfolgt das Einlesen der Geometrieparameter des Objekts 20' (vgl. Schritt 120) z. B. unter Zuhilfenahme eines CAD-Modells des zu prüfenden Objekts 20'. Ausgehend von diesen Geometrieparametern sind also sozusagen die Abmessungen des zu prüfenden Objekts 20/20' sowie auch die einzelnen Wandstärken und daraus resultierenden Innenvolumina bekannt.

Optional können auch Informationen bzgl. der Prüfung (Prüfspezifikation) z. B. zur minderst geforderten Auflösung, maximale Fehlerzahl je Volumen, etc. eingelesen werden. Dieser Schritt ist mit dem Bezugszeichen 115 versehen.

Unter Kenntnis dieser zwei Parameter 10' und 20' können nun Objekte 20' virtuell in dem virtuellen Röntgensystem 10' angeordnet werden bzw. die Lage der Röntgenprojektionen des Bauteils simuliert werden, um eine ersten Durchstrahlungsposition zu (vgl. α1) zu bestimmen. Das Ermitteln erfolgt im Regelfall unter Zuhilfenahme eines Benutzers, kann aber auch automatisiert erfolgen. Dieser Schritt ist mit dem Bezugszeichen 130 versehen. Hierbei werden dann bereits Faktoren berücksichtigt, beispielsweise ob ausgehend von den Abmessungen des Objekts 20' eine Kollision mit dem Röntgensystem 10' drohen würde oder ob das Objekt so auf dem Manipulator 18 angeordnet werden kann.

Nun wird dann das virtuelle Objekt 20' in eine zweite virtuelle Relativposition zu dem virtuellen Röntgensystem 10' überführt, um so einen zweiten Durchstrahlungsposition α2 zu erhalten. Das Ermitteln der zweiten Durchstrahlungsposition ist mit dem Bezugszeichen 140 versehen. Auch dieser Schritt kann durch Benutzerinteraktion, teilautomatisiert oder automatisiert erfolgen. "Teilautonom" heißt in diesem Zusammenhang, dass die Software bzw. Vorrichtung automatisierte Vorschläge für optimale Prüfpositionen berechnet und diese dem Benutzer vorschlägt. Wenn das Objekt 20' dann in die zweite Relativposition (vgl. α2) überführt ist, sind dann entsprechend Ausführungsbeispielen auch die entsprechenden Bewegungsparameter L, Q und/oder R für den Manipulator bekannt, so dass eine Reproduktion der zweiten Durchstrahlungsposition sowohl im virtuellen als auch im realen Fall (vgl. Bezugszeichen 10) möglich ist.

Zusätzlich zu den Schritten 130 und 140 können entsprechend weiteren Ausführungsbeispielen auch weitere Relativpositionen bzw. weitere Durchstrahlungsposition ermittelt werden, bevor der Schritt 150 durchgeführt wird. Entsprechend wiederum weiteren Ausführungsbeispielen kann zusätzlich zu den Prüfpositionen (Schritt 130, 140) auch das Bestimmen der optimalen Röntgenparameter erfolgen, ohne dass die Bauteile zur Verfügung stehen müssen bzw. die Prüfkapazität der Anlage beeinträchtigt wird.

Nachdem nun die relevanten Parameter des Röntgensystems 10' sowie des Objekts 20' inklusive der geplanten Durchstrahlungspositionen zu α1 und α2 bekannt sind, kann nun analysiert werden, ob diese Positionen/Winkel α1 und α2 sich für die Werkstoffprüfung eignen. Optionaler Weise umfasst die Prüfplanung nicht nur das Bestimmen der Durchstrahlungspositionen, sondern auch das Ermitteln weiterer für die Röntgenprüfung relevanter Parameter, wie Röntgenparameter (Spannung, Strom, SNR, Filter, Belichtungszeit). Diese Informationen werden dann als Zusatzinformationen ausgegeben (vgl. Schritt 150). Alternativ oder additiv kann auch noch mittels des nachfolgenden Schritts zusätzliche Information generiert werden, die für die reale Werkstoffprüfung die Auswertung verbessert. Diese Analyse erfolgt dann in dem Schritt 150.

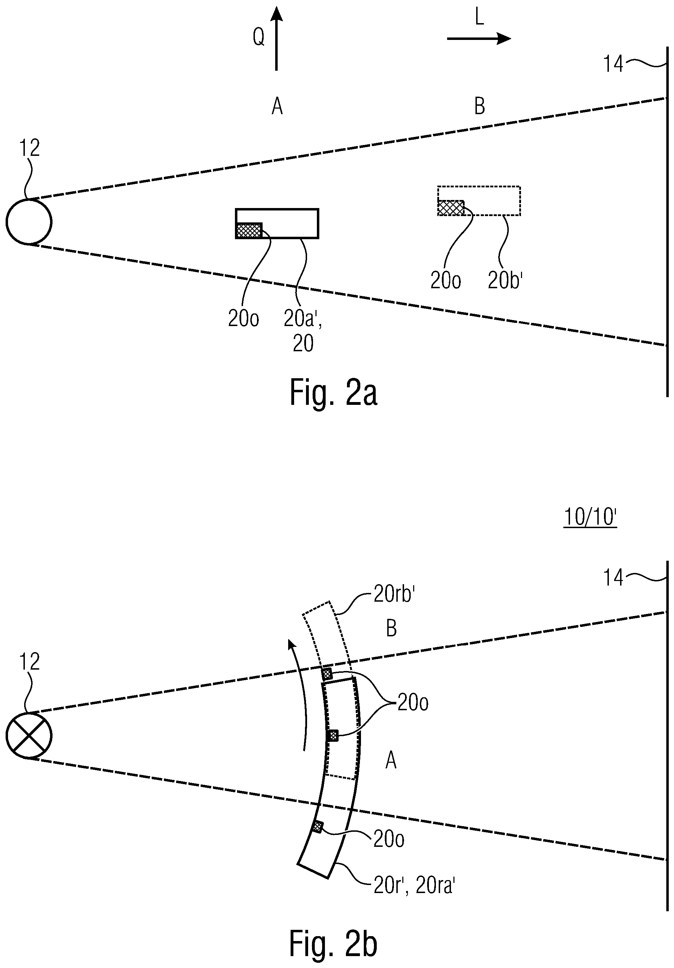

Hinter diesem Schritt 150 ist eine Vielzahl von Einzelanalysen zusammengefasst, die sich teilweise gegenseitig bedingen bzw. zumindest gut miteinander kombinierbar sind. Wichtig ist, dass dieser Schritt 150 aufgrund der hohen Komplexität vollautomatisiert erfolgt. Beispielsweise können folgende Werte automatisch aus den vorliegenden oder berechneten Informationen übernommen werden, die sonst manuell eingegeben oder gemessen werden müssen: "Vergrößerung des Objekts auf dem Detektor (für jeden Pixel)" oder "Prüfzone (Qualitätszone)". Die jeweiligen Einzelanalysen werden Bezug nehmend auf die Ausführungsbeispiele aus Fig. 2a bis 2e erläutert.

Nachfolgend werden Analyseschritte erläutert, wobei durchgehend diese anhand des virtuellen Objekts 20' mit dem virtuellen Röntgensystem 10' durchgeführt werden. Die Ergebnisse sind dann selbstverständlich in die reale Welt (vgl. Bezugszeichen 10 und 20) übertragbar.

Fig. 2a illustriert anhand von zwei möglichen Positionen A und B für das virtuelle Objekt 20', welches hier mit den Bezugszeichen 20a' an Position A und 20b' an Position B bezeichnet ist. In den Objekten 20a' bzw. 20b' ist ein Merkmal 20o separat markiert.

Die Abbildung des Objekts 20a an der Position a unterscheidet sich gegenüber dem Objekt 20b an der Position 20b in der Realität und auch in der virtuellen Simulation (vgl. 20a' und 20b') dahin gehend, dass unterschiedliche Vergrößerungsfaktoren bei der Durchstrahlung resultieren. Das Objekt 20a' und damit auch der Bereich 20o wird an der Position A viel stärker vergrößert als das Objekt 20b' an der Position B. Insofern ändert sich der Vergrößerungsmaßstab z. B. des Bereichs 20o von der Position A auf die Position B. In anderen Worten ausgedrückt heißt das, dass das Objekt 20b' mit einem anderen Vergrößerungsmaßstab abgebildet wird als das Objekt 20a'.

Diese Information ist auch auf die reale Welt übertragbar, so dass ausgehend von der Simulation entsprechend dem obigen Verfahren durch die Analyse der Vergrößerungsmaßstab je Durchstrahlungsposition ermittelt werden kann und als Auswerteinformation ausgebbar ist.

An dieser Stelle sei angemerkt, dass der Vergrößerungsmaßstab nicht nur von der relativen Position des Röntgensystems 10' gegenüber den Objekten 20a' und 20b' bzw. in der Realität 10 gegenüber 20a und 20b variiert, sondern auch von anderen Faktoren abhängig ist. Hierzu ist insbesondere die Geometrie des Röntgendetektors 14 (gebogene oder gerade Detektorgeometrie) zu nennen. Insofern kann der Vergrößerungsfaktor nicht nur bei einer Verschiebung entlang der Achse L, sondern auch bei einer Querverschiebung entlang der Achse Q variieren, wenn sich dadurch der Abstand Objekt 20a' bzw. relevanter Bereich 20o zu Detektor 14 ändert. Insofern kann der Vergrößerungsfaktor entlang der Detektionsfläche des Detektors 14 variieren.

Entsprechend einem weiteren Ausführungsbeispiel wird auch überprüft, ob der gewählte Vergrößerungsfaktor ausreicht, um Fehler, z. B. Fehler im relevanten Bereich 20o zu detektieren. Hierzu kann der Vergrößerungsfaktor quantifiziert werden (2x oder 5x, ...). Für unterschiedliche Bereiche des zu prüfenden Objekts gibt es unterschiedliche Prüfanforderungen. Z. B sind kritische Bereiche, Bereiche mit höherer mechanischer Belastung, detaillierter und folglich auch mit größerem Vergrößerungsfaktor (z.B. Faktor 20) zu prüfen. Hintergrund hierzu ist, dass die Auflösung des Detektors 14 fix ist und sich abhängig von dem Abbildungsmaßstab eine entsprechende Auflösung des relevanten Bereichs 20o einstellt.

Entsprechend einem weiteren Ausführungsbeispiel kann beim Analysieren überprüft werden, ob alle relevanten Bereiche des zu prüfenden Objekts durch die jeweilige Durchstrahlungsposition abgebildet sind. Dieses Beispiel ist in Fig. 2b dargestellt. Fig. 2b zeigt wiederum das Röntgensystem 10 bzw. virtuelle Röntgensystem 10' mit Röntgenröhre 12 und Detektor 14. Diesmal ist das zu untersuchende Objekt 20r' ein längliches gebogenes Element, was durch eine Durchstrahlungsaufnahme erfasst werden kann.

Das Objekt 20r' kann mittels der Manipulationseinrichtung (nicht dargestellt) entlang des Pfeiles geschwenkt werden, so dass sich für die Abdichtung des gesamten Objekts zwei Positionen einstellen (Position A und Position B). Die Position A ermöglicht die Abbildung der einen Hälfte, während die Position B (vgl. gestrichelte Linie die zweite Hälfte des Objekts 20r'). Zur besseren Darstellung und Differenzierung des Objektes an den zwei Position A und B sind die Bezugszeichen 20ra' und 20rb' eingeführt. Hierbei wird eine Analyse der sogenannten Prüfzonen beziehungsweise Qualitätszonen durchgeführt. Gerade die Einrichtung der Qualitätszonen gestaltet sich schwierig, da es sich bei der Röntgenprüfung um eine 2D-Abbildung eines 3D-Objekts handelt und somit sich Bereiche in der Abbildung überlappen können. Dieser Überlapp kann entsprechend Ausführungsbeispielen automatisch detektiert werden.

Bei diesem Verfahren werden entsprechend einem Ausführungsbeispiel die Aufnahmen bzw. virtuellen Aufnahmen des Objekts 20ra' und 20rb' simuliert. Anhand dieser virtuellen Aufnahmen kann dann festgestellt werden, ob alle relevanten Merkmale (vgl. 20o oder das ganze Objekt 20r') durch die Mehrzahl der Aufnahmen mit den mehreren Durchstrahlungspositionen erfasst wird. Im Ergebnis kann also verifiziert werden, dass alle Bereiche des Bauteils entsprechend der Prüfspezifikation hinreichend auf dem Detektor abgebildet werden.

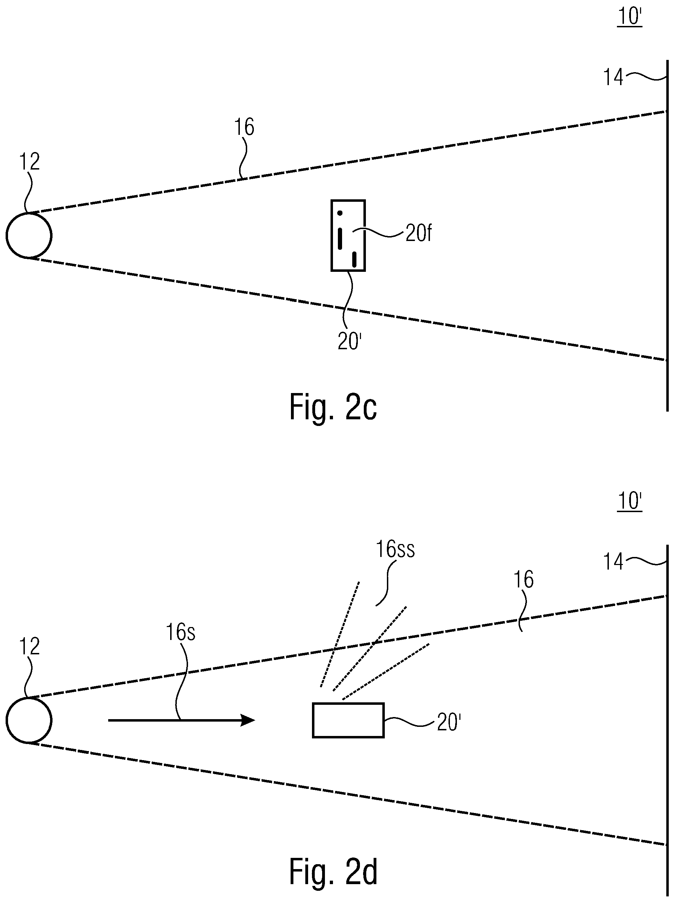

Bezug nehmend auf Fig. 2c wird eine weitere Variante des Analysierens, nämlich das Simulieren der zerstörungsfreien Werkstoffprüfung erläutert. Fig. 2c zeigt wiederum das virtuelle Röntgensystem 10', wobei sich im Strahlenkegel 16 das Objekt 20' befindet. In diesem Objekt sind mittels Punkten und Strichen Fehler im Objekt kenntlich gemacht. Bei dem Schritt wird nun hier anhand einer Durchstrahlungsaufnahme simuliert, ob die eine Aufnahme entsprechend der ersten Durchstrahlungsposition bzw. die Durchstrahlungsaufnahme entsprechend der gewählten Durchstrahlungsposition ausreicht, um die entsprechenden Fehler zu detektieren. Hierbei wird entsprechend dem Ausführungsbeispiel wiederum eine virtuelle Werkstoffprüfung durchgeführt, indem beispielsweise die entsprechend den Durchstrahlungspositionen erhaltenen Aufnahmen simuliert werden. Anhand der Aufnahmen kann dann bestimmt werden, ob die zu detektierenden Fehler, z. B. in den Bereichen, wo häufig Fehler auftreten (an Schweißnähten, Übergangsstellen bzw. allgemein Regionen mit hoher Belastung) erkannt werden können. Bei dem hier dargestellten Fall, bei dem Fehler im Werkstoff 20' verteilt wurden, würde bei der einen Durchstrahlungsaufnahme der Fall entstehen, dass der Fehler 20f durch den bzw. mit dem strichförmigen davor angeordneten Fehler bei der Durchstrahlung überlagert wird, so dass die eindeutige Detektierung des Fehlers 20f nicht möglich sein könnte. Um dies herauszufinden kann entsprechend weiteren Ausführungsbeispielen in dem virtuellen Objekt 20' ein Verteilen von Fehlern erfolgen. Dieses Verteilen kann auch unter Zuhilfenahme von Stochastik durchgeführt werden. In anderen Worten ausgedrückt heißt das, dass künstlich Fehler (Grenzfehler) eingebracht werden, um eine Simulation der Abbildung derselben durchzuführen. So kann die parametrierte Bildverarbeitung (automatisch/manuell) direkt auf ihre Funktionalität und Zuverlässigkeit für verschiedene Fehlertypen getestet werden. Die Einbringung von zufälligen Grenzfehlern kann automatisch und in mehreren Durchläufen getestet werden, so dass über eine größere Stichprobe die Prüfpositionen und daraus resultierende Bildqualität auf die potentielle Fehlererkennung getestet wird.

Entsprechend Ausführungsbeispielen kann es auch vorkommen, dass einzelne Fehler 20f nicht aufgrund von Verdeckung, sondern aufgrund von Streustrahlung nicht oder schwer zu detektieren ist. Deshalb umfasst das Verfahren des Überprüfens, ob alle Fehler detektiert werden können, auch das Ermitteln der entsprechenden Streustrahlung.

Wenn man nun Fehler entdeckt hat, ist es auch möglich, aus einer einzigen Aufnahme herauszufinden, wie weit sich der Fehler maximal ausdehnt, da ja die Geometriedaten des Objekts bekannt sind. Insofern umfasst das Verfahren entsprechend dem weiteren Ausführungsbeispiel das Ermitteln einer Ausdehnung eines Fehlers anhand der Geometrieparameter des zu prüfenden Objekts 20'.

Bezug nehmend auf Fig. 2d wird ein weiteres Analyseverfahren, nämlich das Ermitteln der Streustrahlung für die einzelnen Durchstrahlungsposition bestimmt. Die Streustrahlung ist abhängig von der Geometrie des zu prüfenden Objekts und/oder von dem Material. Weiter variiert die Streustrahlung in Abhängigkeit von den Durchstrahlungspositionen. Fig. 2d zeigt das Röntgensystem 10' mit der Röntgenröhre 12 und dem Röntgendetektor 14, wobei im Strahlenkegel 16 das Objekt 20' (virtuelles Objekt) angeordnet ist. Die Röntgenröhre emittiert Röntgenstrahlung, welche hier mit den Bezugszeichen 16s versehen ist. Diese trifft auf den Prüfkörper 20', wobei sie diesen Prüfkörper 20' im Wesentlichen durchstrahlt, um mittels dem Röntgendetektor 14 ein Abschwächungsprofil zu ermitteln. Ein Teil der Röntgenstrahlung, die hier mit dem Bezugszeichen 16ss versehen ist, wird jedoch in die Umgebung gestreut. Auch kann eine Streuung an weiteren Elementen erfolgen. Problematisch an dieser Streustrahlung ist, dass diese Streustrahlung das Ermitteln von Fehlern in dem Prüfkörper 20' erschweren bzw. sogar verhindern kann, wenn dieses sich wiederum mit der Durchstrahlungsstrahlung, welche zu dem Röntgendetektor 14 strahlt, überlagert. Im Allgemeinen wirkt sich die Streustrahlung 16ss negativ auf die Bildqualität aus und kann, bei Kenntnis derselben bei der Reproduktion berücksichtigt bzw. korrigiert werden.

Insofern ergeben sich für die Ermittlung der Streustrahlung folgende Anwendungen: diese Effekte können simuliert werden, um, erstens, eine Aussage darüber zu treffen, ob alle Fehler detektierbar sind (vgl. Ausführungsbeispiele aus Fig. 2c) und, zweitens, als Simulationsergebnis für die spätere Auswertung hinzugezogen werden. Insofern wird eine Information über die Streustrahlung entsprechend einem weiteren Ausführungsbeispiel als Auswerteinformation ausgegeben. Die hier ausgegebene Auswerteinformation liegt z.B. in Form einer Streustrahlungsverteilung über den Detektor vor, so dass bei der tatsächlichen Aufnahme dieselbe um die simulierte Streustrahlung korrigiert werden kann. Dies ermöglicht u. a. eine genauere Berechnung bzw. Ausdehnung der Größe von Fehlstellen in Durchstrahlungsrichtung.

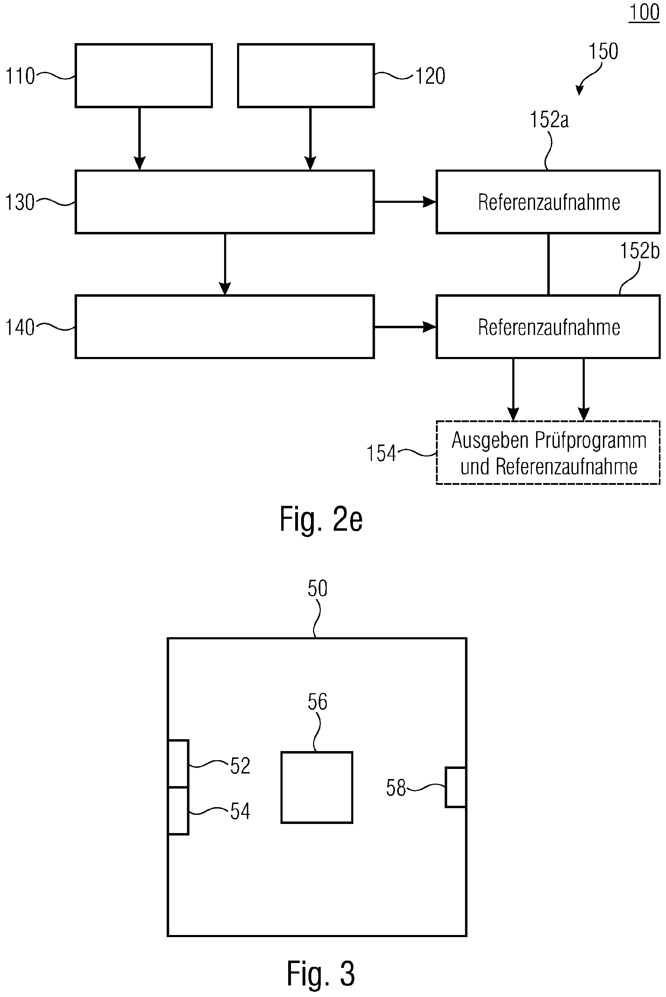

Fig. 2e zeigt im Wesentlichen das Verfahren 100, wobei der Schritt 150 in zwei Unterschritte 152a und 152b untergliedert ist. Bei dem Schritt 152a wird eine erste Referenzaufnahme ausgehend von dem ersten der Strahlwinkel genommen, während bei dem Schritt 152b eine zweite Referenzaufnahme ausgehend von der zweiten Durchstrahlungsposition genommen wird. Insofern eignen sich die vorhandenen CAD-Daten zur Generierung von künstlichen Referenzbildern bzw. zur Optimierung der Bildverarbeitung durch das Vorwissen über das Bauteil. Bei einer Mehrzahl an Durchstrahlungspositionen sind diese Schritte 152a und 152b entsprechend erweiterbar.

Diese Referenzaufnahmen dienen als Auswerteinformationen für die reale Werkstoffprüfung und können zusammen mit dem Prüfprogramm ausgegeben werden, was anhand des optionalen Schritts 154 illustriert ist.

Entsprechend einem weiteren Ausführungsbeispiel kann zusammen mit dem Prüfprogramm auch eine Information über die Geometrie des Objekts mit ausgegeben werden, was insbesondere für die Detektion und Lokalisierung von Fehlern bei der realen Werkstoffprüfung vorteilhaft ist. Die CAD-Daten lassen sich also weiter dafür benutzen, detektierte Defekte einer genauen echten Position im Bauteil zuzuordnen. Diese Information kann benutzt werden, um der Produktion eine genaue Aussage über den Ort zu geben.

Beispiel: Da es häufig in Durchstrahlungsaufnahmen sogenannte Überlappbereiche gibt, die einerseits einem kritischen Bereich und andererseits einen nicht kritischen Bereich (nebeneinander oder hintereinander) zuzuordnen sind, ist bei der Auswertung der realen Durchstrahlungsaufnahmen die Kenntnis, welche Bereiche die Durchstrahlungsposition alle abbildet, wichtig. Bei der Auswahl der Durchstrahlungspositionen kann diese Situation bereits berücksichtigt werden, wenn die Durchstrahlungspositionen beispielsweise so gewählt sind, dass sich die Prüfzonen in den Projektionen klar abgrenzen lassen. Sollte das aber nicht möglich sein, kann die Information zu Überlappbereichen der Bildverarbeitung bzw. der realen Prüfung bereitgestellt werden. Die Information kann zusammen mit den Durchstrahlungspositionen mit ausgegeben werden. So kann bei der Auswertung besser bestimmt werden, ob ein erkannter Fehler eindeutig einem kritischen Bereich zuzuordnen ist oder sich in einem unkritischen Bereich befindet, oder beispielsweise initiiert werden, dass der Fehler nochmal aus einer weiteren Durchstrahlungspositionen bestimmt werden soll.

Weiter können die erläuterten Informationen bei der realen Werkstoffprüfung in einer Datenbank mit weiteren Metadaten zu Defekten, wie Größenparameter abgelegt werden. Die Informationen ermöglichen eine Datenauswertung über Fehlerhäufigkeit in bestimmten Bereichen. Unregelmäßigkeiten der Produktionsqualität können so analysiert und Fehler eingegrenzt werden. Für nachfolgend produzierte Bauteile ermöglicht das ein Abstellen der entsprechenden Fehler.

Additiv oder alternativ hierzu wäre auch folgende Anwendung denkbar: wenn beispielsweise bei der realen Werkstoffprüfung ein Fehler erkannt wird, kann auch gleichzeitig die Ausdehnung des Fehlers ermittelt werden, da dieser sich ja nicht weiter als das eigentliche Volumen des Prüfkörpers erstrecken kann. Das heißt also Mitwissen über die exakte Wandstärke an jedem Pixel kann zudem eine genaue Aussage über die Fehlerausdehnung in Durchstrahlungsrichtung (relativ zur Gesamtwandstärke und absolut) getroffen werden.

Weitere Zusatzinformation, die bei der Prüfplanung generiert werden können, sind Werte zur Parametrisierung der Bildverarbeitung (Schwellwerte, Körnungsgröße, Streustrahlung oder Filterparameter). Bevorzugt werden diese unter Berücksichtigung der Prüfspezifikation ermittelt.

Entsprechend weiteren Ausführungsbeispielen können die oben beschriebenen Verfahren auch durch eine Vorrichtung durchgeführt werden. Diese Vorrichtung wird Bezug nehmend auf Fig. 3 erläutert.

Fig. 3 zeigt eine Vorrichtung 50 mit einer Schnittstelle 52 zum Empfangen der Geometrieparameter des Röntgensystems sowie einer weiteren Schnittstelle zum Empfangen der Geometrieparameter des zu prüfenden Objekts. Diese Daten werden dann von einer Berechnungseinheit, wie z. B. einer CPU 56 verarbeitet, um erstens die Durchstrahlungsposition - gegebenenfalls durch Benutzerinteraktion - zu bestimmen und dann die Eignung zur Werkstoffprüfung mittels der jeweiligen Position zu berechnen bzw. Auswerteinformationen auszugeben. Die Eignung zur Durchstrahlungsprüfung wird dem Benutzer über eine Benutzerschnittstelle (nicht dargestellt) angezeigt. Des Weiteren kann die Vorrichtung eine weitere Schnittstelle, nämlich zum Ausgeben der Auswerteinformation und/oder zum Ausgeben des Prüfprogramms aufweisen. Diese weitere Schnittstelle ist mit dem Bezugszeichen 58 versehen.

Bezüglich der Funktionalität dieser Vorrichtung 50 sei auf obige Ausführungen zu dem Verfahren 100 bzw. auf die Ausführungen zu den Fig. 2a bis 2e verwiesen. Die entsprechenden Prozeduren können durch den Algorithmus, der auf dem Prozessor 56 ausgeführt wird, durchgeführt werden. Allgemein kann die Vorrichtung 50 auch durch einen herkömmlichen PC realisiert sein.

In anderen Worten ausgedrückt heißt das, dass auch wenn die Details der vorliegenden Erfindung anhand eines Verfahrens beschrieben wurden, die einzelnen Verfahrensschritte entsprechend auch auf die Vorrichtung übertragen werden können. Folglich stellt eine Beschreibung des entsprechenden Verfahrensschritts auch eine Beschreibung der entsprechenden Blocks oder Einheit der Vorrichtung 50 dar.

Das oben erläuterte Verfahren 100 bzw. die Vorrichtung 50 kann allgemein bei der Serienprüfung mittels Röntgen von Bauteilen angewendet werden.

Eine Beispielanwendung, bei der das Verfahren große Vorteile bietet, ist die Prüfung von Leichtmetallrädern. Bei dieser Anwendung existieren typischerweise mehrere Hundert Prüfprogramme für unterschiedliche Radtypen. Durch die hohe Vielfalt an Artikeln kommen oftmals jede Woche neue Programme hinzu. Das Verfahren würde die Einrichtung neuer Typen deutlich erleichtern.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren (100) zur Bestimmung von mindestens zwei Durchstrahlungspositionen (α1, α2) für die zerstörungsfreie Werkstoffprüfung eines zu prüfenden Objekts mittels eines Röntgensystems (10, 10'), mit folgenden Schritten:
Einlesen (110) von Geometrieparametern des Röntgensystems (10, 10');
Einlesen (120) von Geometrieparametern des zu prüfenden Objekts;
Ermitteln (130) einer ersten Relativposition des Röntgensystems (10, 10') zur Untersuchung des zu prüfenden Objekts gegenüber dem zu prüfenden Objekt, um eine erste Durchstrahlungsposition (α1) zu erhalten;
Ermitteln (140) einer zweiten Relativposition des Röntgensystems (10, 10') zur Untersuchung des zu prüfenden Objekts gegenüber dem zu prüfenden Objekt, um eine zweite Durchstrahlungsposition (α2) zu erhalten; und
Analysieren (150) der ersten und der zweiten Durchstrahlungsposition (α2, α2) auf Basis der Geometrieparameter des Röntgensystems (10, 10') und auf Basis der Geometrieparameter des zu prüfenden Objekts zur Ermittlung von Auswerteinformationen,
wobei zumindest der Schritt "Analysieren" (150) automatisiert erfolgt,
wobei der Schritt "Analysieren" (150) einen Schritt des "Erkennens eines Fehlers" in zumindest einer einzigen Aufnahme sowie des "Ermittelns einer maximalen Ausdehnung" des Fehlers in dem zu prüfenden Objekt anhand der Geometrieparameter des zu prüfenden Objekts umfasst, und die maximale Ausdehnung als Auswerteinformation ausgegeben wird.

2. Verfahren (100) gemäß Anspruch 1, wobei der Schritt "Analysieren" (150) das Bestimmen eines Vergrößerungsfaktors je Durchstrahlungsposition (α1, α2) ausgehend von der ersten und zweiten Relativposition umfasst, um je Durchstrahlungsposition (α1, α2) einen Vergrößerungsmaßstab als Auswerteinformation bezogen auf die reelle Werkstoffprüfung zu erhalten und auszugeben.

3. Verfahren (100) gemäß Anspruch 2, wobei die Bestimmung des Vergrößerungsfaktors je Durchstrahlungsposition (α1, α2) unter Berücksichtigung der relativen Verdrehung von Strahlenpegel zu dem zu prüfenden Objekt und/oder eines Abstandes einer Röntgenquelle des Röntgensystems (10, 10') zu dem zu prüfenden Objekt und/oder eines Abstandes des zu untersuchenden Objekts zu einem Strahlendetektor des Röntgensystems (10, 10') und/oder einer Geometrie des Strahlendetektors und/oder einer Geometrie des Strahlenkegels und/oder von Variationen des Vergrößerungsfaktors je Durchstrahlungsposition (α1, α2) entlang einer Detektionsfläche des Detektors erfolgt.

4. Verfahren (100) gemäß Anspruch 1, wobei der Schritt "Analysieren" (150) das Überprüfen dahin gehend umfasst, ob alle zu prüfenden Elemente des zu prüfenden Objekts in virtuell simulierten Aufnahmen aus den zumindest ersten und zweiten Durchstrahlungspositionen (α1, α2) abgebildet sind, und Ausgeben einer Information als Auswerteinformation, welche kritischen und nicht kritischen Bereiche die ersten und zweiten Durchstrahlungspositionen (α1, α2) klar abgegrenzt abbilden, wobei kritische Bereich Bereiche mit wechselndem Querschnitt oder Übergangsstellen und/oder Bereiche mit höherer mechanischer Belastung umfasst.

5. Verfahren (100) gemäß Anspruch 1, wobei der Schritt des "Überprüfens" das Simulieren der realen Aufnahmen aus den zumindest ersten und zweiten Durchstrahlungspositionen (α1, α2) aufweist, um die virtuell simulierten Aufnahmen aus den zumindest ersten und zweiten Durchstrahlungspositionen (α1, α2) zu erhalten; oder
wobei der Schritt des "Überprüfens" das Simulieren der realen Aufnahmen aus den zumindest ersten und zweiten Durchstrahlungspositionen (α1, α2) aufweist, um die virtuell simulierten Aufnahmen aus den zumindest ersten und zweiten Durchstrahlungspositionen (α1, α2) zu erhalten, und das Verfahren (das Erkennen der zu prüfenden Elemente des zu prüfenden Objekts anhand der Geometrieparameter des zu prüfenden Objekts umfasst.

6. Verfahren (100) gemäß einem der vorherigen Ansprüche, wobei das "Analysieren" (150) das "Bestimmen einer Streustrahlung" für die realen Aufnahmen zugehörig zu den zumindest ersten und zweiten Durchstrahlungspositionen (α1, α2) umfasst, wobei die Streustrahlung abhängig von einer Geometrie des zu prüfenden Objekts und/oder einem Material des zu prüfenden Objekts und/oder der ersten und/oder zweiten Relativposition ist.

7. Verfahren (100) gemäß Anspruch 6, wobei das "Bestimmen der Streustrahlung" den Schritt des "Simulierens der realen Aufnahmen" aus den zumindest ersten und zweiten Durchstrahlungspositionen (α1, α2) aufweist, um die virtuell simulierten Aufnahmen aus den zumindest ersten und zweiten Durchstrahlungspositionen (α1, α2) zu erhalten.

8. Verfahren (100) gemäß einem der vorherigen Ansprüche, wobei das Verfahren (100) den Schritt des "Erzeugens von Referenzbildern" als Auswerteinformationen für das zu prüfende Objekt umfasst.

9. Verfahren (100) gemäß einem der vorherigen Ansprüche, wobei das Verfahren (100) den Schritt des "Ausgebens eines Prüfprogramms" umfassend zumindest eine Information bezüglich der ersten und zweiten Durchstrahlungsposition (α1, α2) umfasst.

10. Verfahren (100) gemäß Anspruch 9, wobei das Prüfprogramm zusätzlich eine Information über die Geometrieparameter des zu prüfenden Objekts umfasst, so dass bei der realen Werkstoffprüfung real detektierte Fehler der Geometrie des zu prüfenden Objekts zugeordnet werden können.

11. Verfahren (100) gemäß einem der vorherigen Ansprüche, wobei ausgehend von der Wandstärke als Geometrieparameter des zu prüfenden Objekts an jedem Pixel eine Aussage über die maximale Fehlerausdehnung in Durchstrahlungsrichtung bestimmbar ist.

12. Verfahren (100) nach einem der vorherigen Ansprüche, wobei der Schritt "Analysieren" (150) das Bestimmen eines Vergrößerungsfaktors je Durchstrahlungsposition (α1, α2) ausgehend von der ersten und zweiten Relativposition umfasst, um je Durchstrahlungsposition (α1, α2) einen Vergrößerungsmaßstab als Auswerteinformation bezogen auf die reelle Werkstoffprüfung zu erhalten und auszugeben; oder wobei der Schritt "Analysieren" (150) das Bestimmen eines Vergrößerungsfaktors je Durchstrahlungsposition (α1, α2) ausgehend von der ersten und zweiten Relativposition umfasst, um je Durchstrahlungsposition (α1, α2) einen Vergrößerungsmaßstab als Auswerteinformation bezogen auf die reelle Werkstoffprüfung zu erhalten und auszugeben; wobei die Bestimmung des Vergrößerungsfaktors je Durchstrahlungsposition (α1, α2) unter Berücksichtigung der relativen Verdrehung von Strahlenpegel zu dem zu prüfenden Objekt und/oder eines Abstandes einer Röntgenquelle des Röntgensystems (10, 10') zu dem zu prüfenden Objekt und/oder eines Abstandes des zu untersuchenden Objekts zu einem Strahlendetektor des Röntgensystems (10, 10') und/oder einer Geometrie des Strahlendetektors und/oder einer Geometrie des Strahlenkegels und/oder von Variationen des Vergrößerungsfaktors je Durchstrahlungsposition (α1, α2) entlang einer Detektionsfläche des Detektors erfolgt.

13. Computerprogramm mit einem Programmcode zur Durchführung des Verfahrens (100) nach einem der vorherigen Ansprüche, wenn das Programm auf einem Computer abläuft.

14. Vorrichtung zur Bestimmung von zumindest zwei Durchstrahlungspositionen (α1, α2) für die zerstörungsfreie Werkstoffprüfung eines zu prüfenden Objekts mittels eines Röntgensystems (10, 10'), mit folgenden Merkmalen:
einer Schnittstelle zum Einlesen (110) von Geometrieparametern des Röntgensystems (10, 10');
einer Schnittstelle zum Einlesen (120) von Geometrieparametern des zu prüfenden Objekts;
einer Berechnungseinheit, die ausgebildet ist, um eine erste Relativposition des Röntgensystems (10, 10') zur Untersuchung des zu prüfenden Objekts gegenüber dem zu prüfenden Objekt, zu ermitteln, um eine erste Durchstrahlungsposition (α 1) zu erhalten, und um eine zweite Relativposition des Röntgensystems (10, 10') zur Untersuchung des zu prüfenden Objekts gegenüber dem zu prüfenden Objekt zu ermitteln, um eine zweite Durchstrahlungsposition (α 2) zu erhalten,
wobei die Berechnungseinheit ausgebildet ist, um die ersten und den zweiten Durchstrahlungsposition (α1, α2) auf Basis der Geometrieparameter des Röntgensystems (10, 10') und auf Basis der Geometrieparameter des zu prüfenden Objekts zur Ermittlung von Auswerteinformationen zu analysieren, wobei das Analysieren (150) automatisiert erfolgt,
wobei das "Analysieren" (150) das "Ermittelns einer maximalen Ausdehnung" eines Fehlers in dem zu prüfenden Objekt anhand der Geometrieparameter des zu prüfenden Objekts umfasst und die maximale Ausdehnung als Auswerteinformation ausgegeben wird.

## Claims

1. Method (100) for determining at least two radiographic positions (α1, α2) for nondestructive material testing of device under test by means of an X-ray system (10, 10'), comprising:
reading in (110) geometry parameters of the X-ray system (10, 10');
reading in (120) geometry parameters of the device under test;
determining (130) a first relative position of the X-ray system (10, 10') for examining the device under test with respect to the device under test to obtain a first radiographic position (α1);
determining (140) a second relative position of the X-ray system (10, 10') for examining the device under test with respect to the device under test to obtain a second radiographic position (α2); and
analyzing (150) the first and the second radiographic positions (α2, α2) based on the geometry parameters of the X-ray system (10, 10') and based on the geometry parameters of the device under test to determine evaluation information,
wherein at least the step "analyzing" (150) takes place automatically,
wherein the step "analyzing" (150) comprises a step of "detecting an error" in at least one single picture and of "determining a maximum extent" of the error in the device under test based on the geometry parameters of the device under test, and the maximum extent is output as evaluation information.

2. Method (100) according to Claim 1, wherein the step "analyzing" (150) comprises determining a magnification factor per radiographic position (α1, α2) starting from the first and second relative positions to obtain and output a magnification ratio per radiographic position (α1, α2) as evaluation information in relation to the real material testing.

3. Method (100) according to Claim 2, wherein determining the magnification factor per radiographic position (α1, α2) takes place along a detection area of the detector by considering the relative torsion of radiation level with respect to the device under test and/or a distance of an X-ray source of the X-ray system (10, 10') with respect to the device under test and/or a distance of the device under test with respect to a radiation detector of the X-ray system (10, 10') and/or a geometry of the radiation detector and/or a geometry of the radiation cone and/or variations of the magnification factor per radiographic position (α1, α2).

4. Method (100) according to Claim 1, wherein the step "analyzing" (150) comprises checking as to whether all elements to be tested of the device under test are imaged in virtually simulated pictures from the at least first and second radiographic positions (α1, α2), and outputting information as evaluation information, which critical and non-critical areas image the first and second radiographic positions (α1, α2) in a clearly delimited manner, wherein critical area comprises areas with a changing cross section or transition points and/or areas with a higher mechanical load.

5. Method (100) according to Claim 1, wherein the step of "checking" comprises simulating the real pictures from the at least first and second radiographic positions (α1, α2) to obtain the virtually simulated pictures from the at least first and second radiographic positions (α1, α2); or
wherein the step of "checking" comprises simulating the real pictures from the at least first and second radiographic positions (α1, α2) to obtain the virtually simulated pictures from the at least first and second radiographic positions (α1, α2), and the method comprises detecting the elements to be tested of the device under test based on the geometry parameters of the device under test.

6. Method (100) according to one of the preceding claims, wherein "analyzing" (150) comprises "determining stray radiation" for the real pictures associated with the at least first and second radiographic positions (α1, α2), wherein the stray radiation is dependent on a geometry of the device under test and/or a material of the device under test and/or the first and/or second relative position.

7. Method (100) according to Claim 6, wherein "determining the stray radiation" comprises the step of "simulating the real pictures" from the at least first and second radiographic positions (α1, α2) to obtain the virtually simulated pictures from the at least first and second radiographic positions (α1, α2).

8. Method (100) according to one of the preceding claims, wherein the method (100) comprises the step of "generating reference images" as evaluation information for the device under test.

9. Method (100) according to one of the preceding claims, wherein the method (100) comprises the step of "outputting a test program" including at least one piece of information relating to the first and second radiographic positions (α1, α2).

10. Method (100) according to Claim 9, wherein the test program additionally comprises information on the geometry parameters of the device under test, such that, in the real material testing, really detected errors can be allocated to the geometry of the device under test.

11. Method (100) according to one of the preceding claims, wherein, starting from the wall thickness as geometry parameter of the device under test, a statement relating to the maximum extent of the error in the radiographic direction can be determined at each pixel.

12. Method (100) according to one of the preceding claims, wherein the step "analyzing" (150) comprises determining a magnification factor per radiographic position (α1, α2) starting from the first and second relative positions to obtain and output a magnification ratio per radiographic position (α1, α2) as evaluation information in relation to the real material testing; or wherein the step "analyzing" (150) comprises determining a magnification factor per radiographic position (α1, α2) starting from the first and second relative positions to obtain and output a magnification ratio per radiographic position (α1, α2) as evaluation information in relation to the real material testing; wherein determining the magnification factor per radiographic position (α1, α2) takes place along a detection area of the detector by considering the relative torsion of radiation level with respect to the device under test and/or a distance of an X-ray source of the X-ray system (10, 10') with respect to the device under test and/or a distance of the device under test with respect to a radiation detector of the X-ray system (10, 10') and/or a geometry of the radiation detector and/or a geometry of the radiation cone and/or variations of the magnification factor per radiographic position (α1, α2).

13. Computer program having a program code for performing the method (100) according to one of the preceding claims when the program runs on a computer.

14. Apparatus for determining at least two radiographic positions (α1, α2) for non-destructive material testing of a device under test by means of an X-ray system (10, 10'), comprising:
an interface for reading in (110) geometry parameters of the X-ray system (10, 10');
an interface for reading in (120) geometry parameters of the device under test;
a calculating unit configured to determine a first relative position of the X-ray system (10, 10') for examining the device under test with respect to the device under test to obtain a first radiographic position (α1), and to determine a second relative position of the X-ray system (10, 10') for examining the device under test with respect to the device under test to obtain a second radiographic position (α2),
wherein the calculating unit is configured to analyze the first and the second radiographic positions (α1, α2) based on the geometry parameters of the X-ray system (10, 10') and based on the geometry parameters of the device under test to determine evaluation information, wherein analyzing (150) takes place automatically,
wherein "analyzing" (150) comprises "determining a maximum extent" of an error in the device under test based on the geometry parameters of the device under test, and the maximum extent is output as evaluation information.

## Revendications

1. Procédé (100) de détermination d'au moins deux positions de radiographie (α1, α2) pour l'essai de matériau non destructif d'un objet à soumettre à essai à l'aide d'un système à rayons X (10, 10'), aux étapes suivantes consistant à :
lire (110) les paramètres géométriques du système à rayons X (10, 10') ;
lire (120) les paramètres géométriques de l'objet à soumettre à essai ;
déterminer (130) une première position relative du système à rayons X (10, 10') pour l'examen de l'objet à soumettre à essai par rapport à l'objet à soumettre à essai, pour obtenir une première position de radiographie (α1) ;
déterminer (140) une deuxième position relative du système à rayons X (10, 10') pour l'examen de l'objet à soumettre à essai par rapport à l'objet à soumettre à essai, pour obtenir une deuxième position de radiographie (α2) ; et
analyser (150) la première et la deuxième position de radiographie (α2, α2) sur base des paramètres géométriques du système à rayons X (10, 10') et sur base des paramètres géométriques de l'objet à soumettre à essai pour déterminer des informations d'évaluation,
dans lequel au moins l'étape consistant à "analyser" (150) a lieu de manière automatisée,
dans lequel l'étape « d'analyse » (150) comporte une étape consistant à « détecter un défaut » dans au moins un seul cliché ainsi qu'à « déterminer une taille maximale » du défaut dans l'objet à soumettre à essai à l'aide des paramètres géométriques de l'objet à soumettre à essai,
et la taille maximale est sortie comme information d'évaluation.

2. Procédé (100) selon la revendication 1, dans lequel l'étape « d'analyse » (150) comporte le fait de déterminer un facteur d'agrandissement par position de radiographie (α1, α2) en partant de la première et de la deuxième position relative pour obtenir et pour sortir, par position de radiographie (α1, α2), une échelle d'agrandissement comme information d'évaluation par rapport à l'essai de matériau réel.

3. Procédé (100) selon la revendication 2, dans lequel la détermination du facteur d'agrandissement par position de radiographie (α1, α2) a lieu en tenant compte de la distorsion relative du niveau de rayonnement par rapport à l'objet à soumettre à essai et/ou d'une distance entre une source de rayons X du système à rayons X (10, 10') et l'objet à soumettre à essai et/ou d'une distance entre l'objet à examiner et un détecteur de rayonnement du système à rayons X (10, 10') et/ou d'une géométrie du détecteur de rayonnement et/ou d'une géométrie du cône de rayonnement et/ou de variations du facteur d'agrandissement par position de radiographie (α1, α2) le long d'une surface de détection du détecteur.

4. Procédé (100) selon la revendication 1, dans lequel l'étape « d'analyse » (150) comporte le fait de vérifier si tous les éléments à soumettre à essai de l'objet à soumettre à essai sont représentés dans des clichés simulés virtuellement à partir au moins des première et deuxième positions de radiographie (α1, α2) et de sortir une information comme information d'évaluation sur les zones critiques et non critiques que la première et la deuxième position de radiographie (α1, α2) représentent de manière clairement délimitée, dans lequel les zones critiques sont des zones avec une section transversale ou une zone de transition alternant(e) et/ou des zones avec une charge mécanique plus élevée.

5. Procédé (100) selon la revendication 1, dans lequel l'étape de « vérification » présente le fait de simuler des clichés réels à partir au moins des première et deuxième positions de radiographie (α1, α2) pour obtenir les clichés simulés virtuellement à partir au moins des première et deuxième positions de radiographie (α1, α2) ; ou
dans lequel l'étape de « vérification » présente le fait de simuler des clichés réels à partir au moins des première et deuxième positions de radiographie (α1, α2) pour obtenir les clichés simulés virtuellement à partir au moins des première et deuxième positions de radiographie (α1, α2) et le procédé comporte le fait de détecter des éléments à soumettre à essai de l'objet à soumettre à essai à l'aide des paramètres géométriques de l'objet à soumettre à essai.

6. Procédé (100) selon l'une des revendications précédentes, dans lequel « l'analyse » (150) comporte le fait de « déterminer un rayonnement diffus » pour les clichés réels appartenant au moins aux première et deuxième positions de radiographie (α1, α2), dans lequel le rayonnement diffus dépend d'une géométrie de l'objet à soumettre à essai et/ou d'un matériau de l'objet à soumettre à essai et/ou de la première et/ou deuxième position relative.

7. Procédé (100) selon la revendication 6, dans lequel « la détermination du rayonnement diffus » présente l'étape consistant à « simuler les clichés réels » à partir au moins des première et deuxième positions de radiographie (α1, α2) pour obtenir les clichés simulés virtuellement à partir au moins des première et deuxième positions de radiographie (α1, α2).

8. Procédé (100) selon l'une des revendications précédentes, dans lequel le procédé (100) comporte l'étape consistant à « générer des images de référence » comme informations d'évaluation pour l'objet à soumettre à essai.

9. Procédé (100) selon l'une des revendications précédentes, dans lequel le procédé (100) comporte l'étape consistant à « sortir un programme d'essai » comportant au moins une information relative à la première et la deuxième position de radiographie (α1, α2).

10. Procédé (100) selon la revendication 9, dans lequel le programme d'essai comporte par ailleurs une information sur les paramètres géométriques de l'objet à soumettre à essai de sorte que, lors de l'essai de matériau réel, les défauts réellement détectés puissent être associés à la géométrie de l'objet à soumettre à essai.

11. Procédé (100) selon l'une des revendications précédentes, dans lequel, en partant de l'épaisseur de paroi comme paramètres géométriques de l'objet à soumettre à essai sur chaque pixel, il est possible de déterminer une déclaration sur la taille de défaut maximale dans la direction de radiographie.

12. Procédé (100) selon l'une des revendications précédentes, dans lequel l'étape « d'analyse » (150) comporte le fait de déterminer un facteur d'agrandissement par position de radiographie (α1, α2) en partant de la première et de la deuxième position relative pour obtenir et pour sortir, par position de radiographie (α1, α2), une échelle d'agrandissement comme information d'évaluation par rapport à l'essai de matériau réel ; ou dans lequel l'étape « d'analyse » (150) comporte le fait de déterminer un facteur d'agrandissement par position de radiographie (α1, α2) en partant de la première et de la deuxième position relative, par position de radiographie (α1, α2), pour obtenir et pour sortir une échelle d'agrandissement comme information d'évaluation par rapport à l'essai de matériau réel ; dans lequel la détermination du facteur d'agrandissement par position de radiographie (α1, α2) a lieu en tenant compte de la distorsion relative du niveau de rayonnement par rapport à l'objet à soumettre à essai et/ou d'une distance entre une source de rayons X du système à rayons X (10, 10') et l'objet à soumettre à essai et/ou d'une distance entre l'objet à examiner et un détecteur de rayonnement du système à rayons X (10, 10') et/ou d'une géométrie du détecteur de rayonnement et/ou d'une géométrie du cône de rayonnement et/ou de variations du facteur d'agrandissement par position de radiographie (α1, α2) le long d'une surface de détection du détecteur.

13. Programme d'ordinateur avec un code de programme pour la mise en œuvre du procédé (100) selon l'une des revendications précédentes lorsque le programme est exécuté sur un ordinateur.

14. Dispositif de détermination d'au moins deux positions de radiographie (α1, α2) pour l'essai de matériau non destructif d'un objet à soumettre à essai à l'aide d'un système à rayons X (10, 10'), aux caractéristiques suivantes :
une interface destinée à lire (110) les paramètres géométriques du système à rayons X (10, 10') ;
une interface destinée à lire (120) les paramètres géométriques de l'objet à soumettre à essai ;
une unité de calcul qui est conçue pour déterminer une première position relative du système à rayons X (10, 10') pour l'examen de l'objet à soumettre à essai par rapport à l'objet à soumettre à essai, afin d'obtenir une première position de radiographie (α1) et pour déterminer une deuxième position relative du système à rayons X (10, 10') pour l'examen de l'objet à soumettre à essai par rapport à l'objet à soumettre à essai, afin d'obtenir une deuxième position de radiographie (α2),
dans lequel l'unité de calcul est conçue pour analyser la première et la deuxième position de radiographie (α1, α2) sur base des paramètres géométriques du système à rayons X (10, 10') et sur base des paramètres géométriques de l'objet à soumettre à essai pour la détermination d'informations d'évaluation, dans lequel l'analyse (150) a lieu de manière automatisée,
dans lequel « l'analyse » (150) comporte le fait de « déterminer une taille maximale » d'un défaut dans l'objet à soumettre à essai à l'aide des paramètres géométriques de l'objet à soumettre à essai et la taille maximale est sortie comme information d'évaluation.
